# EUROPEAN PATENT SPECIFICATION

(11) **EP 1 262 080 B1**
(45) Date of publication and mention of the grant of the patent: **22.04.2015**
(21) Application number: 01908060.5
(22) Date of filing: 09.03.2001
(51) Int. Cl.: H04W 76/00

(54) **Method for selecting an emergency service number in a mobile phone**
Verfahren zur Auswahl einer Notrufnummer in einem Mobiltelefon
Etiquetage alpha et indication de type de numéro d'appel d'urgence

(30) Priority: 10.03.2000 US 188649 P
(43) Date of publication of application: 04.12.2002
(60) Divisional application: 15159889.3
(73) Proprietor: Core Wireless Licensing S.à.r.l., 2310 Luxembourg (LU)
(72) Inventor: LINDHOLM, Rune, FIN-22720 Sottunga (FI)
(74) Representative: TBK
(86) International application number: PCT/IB2001/000337
(87) International publication number: WO 2001/067796

(56) References cited:
- WO-A-00/48409
- WO-A-99/16181
- JP-A- 11 187 455
- US-A- 5 719 929

## Description

### BACKGROUND OF THE INVENTION

### 1. Technical Field of the Invention

The invention relates generally to the field of accessing emergency services telephonically using a wireless telecommunications network, and more particularly to emergency telephone access at an international level.

### 2. Description of Related Art

In the Global System for Mobile Communications (GSM), an emergency call code is defined for making emergency calls. Typically, an emergency number is used to indicate to the mobile terminal that an emergency call must be initiated, and then an emergency call setup is performed, the setup being specialized in order to get priority in the network. The particular emergency number actually dialed by the user is of little importance, as long as the emergency is recognized and indicated in the call setup, and the call is then routed to an emergency center based on the call setup.

It is common for mobile terminals to include removable smart cards (UICC) which contain a Universal Subscriber Identity Module (USIM). The UICC is an IC card, and thus the UICC holds an integrated circuit containing subscriber data, end user data, authentication data, and/or application data for one or more applications. Emergency call codes are stored in the UICC in a data file named "Emergency Call Codes" (EF_{ECC}). This elementary file can contain one or more emergency call codes. When the user dials a number on the keyboard (e.g. 911) it is compared with the number stored in EF_{ECC}. If the number entered from the keyboard matches a number in EF_{ECC}, the call is set up as an emergency call, regardless of what that particular number is.

The structure of the data file (EF_{ECC}) is exemplified by the following table:

| Identifier: | Structure: transparent | | Mandatory | |
|---|---|---|---|---|
| File size: 3n (n> 1) bytes | | Update activity: low | | |
| Access Conditions: | | | | |
| READ | ALW | | | |
| UPDATE | ADM | | | |
| DEACTIVATE | ADM | | | |
| ACTIVATE | ADM | | | |

| Bytes | Description | | M/O | Length |
|---|---|---|---|---|
| 1 - 3 | Emergency Call Code 1 | | M | 3 bytes |
| 4 - 6 | Emergency Call Code 2 | | O | 3 bytes |
| | | | | |
| (3n-2) - 3n | Emergency Call Code n | | O | 3 bytes |

This table can be found in technical specification 3G TS 31.102. This EF_{ECC} data file contains a set of emergency numbers, maximum 6 digits. The intention with this data file is that it contains various different national emergency call numbers. Typically, up to five emergency call codes have been contained in an EF_{ECC} (i.e. n=5). If the serving network does not recognize any of the "n" emergency call codes, then it is usual for the call to be routed to default emergency numbers. In case there is no match with the dialed number and the numbers stored in the EF_{ECC}, the mobile device checks the default emergency numbers that are stored internally in the mobile device for a match. If there is a match, then the call is set up as an emergency call. These default numbers are also available when a USIM is not present. This is discussed in technical specification 3G TS 22.101. In this related art system, various emergency signals may be sent from a mobile terminal, but those emergency signals will all have the same purpose: to connect the user to a particular emergency center via a particular phone number.

The user is familiar with the national numbers, like 911 in the U.S. Dialing a national emergency call number, when roaming internationally, automatically sets up an emergency call to an emergency center in the roaming network. The actual number entered is in this case not important as long as it matches an entry in the emergency call code data file. In other words, 911 could be dialed by the user even in a country that does not recognize 911 as an emergency number, because the terminal and network know to dial the correct number.

If there are different particular numbers used for emergency calls to the police, ambulance and fire brigade, that can be indicated, by sending the particular dialed number to the network during the emergency call setup. This may work on a national basis, where each emergency number is uniquely defined.

In case of a roaming situation across international borders, however, the country where the user is travelling may have a different emergency call number scenario from the home country. The roaming network cannot, based on the number submitted with the emergency call setup, determine the type of emergency service requested. As a worst case, the same numbers may be used in the roaming network and the home network for emergency calls, but with different meanings. As an example, the ambulance emergency call number in the user's home network may be the same as the emergency call number for the fire brigade in the roaming network. This makes it impossible to use the dialed emergency number for call routability, because the call may end up at the wrong emergency center.

This problem has not been solved on an international level. On a national level, the problem has been solved by using different emergency numbers. As the same number may be used in different countries for different emergency services, it is currently impossible to guarantee the correct emergency service. When roaming internationally, since the number dialed is based on a national emergency numbering scenario stored in the USIM (which is located in the terminal's smart card), the dialed number submitted at the emergency call setup may route the emergency call to a totally different emergency service. In other words, the dialed number is interpreted according to the emergency numbering scenario in the roaming network, which may be a different scenario from the scenario stored in the USIM.

International agreement about a coding scenario may be able to indicate which type of emergency service is needed based on the number dialed. Then the emergency number dialed could be converted to the corresponding emergency service in the roaming network. Until such an agreement, an emergency number may indicate a different type of emergency in different countries, and some countries will not have specific numbers for different types of emergencies. Also, some terminal users will not want to memorize more than one number even in their home country.

In US 5,719,929 generalization of specialized telephone numbers is disclosed, wherein one of a plurality of special telephone numbers is specified in such a way that different special telephone numbers can be specified for the same type of service according to the numbering plan of the area in which a call is being made. A dialing message from a telephone station contains a special number indicator for specifying a particular type of service, such as traveler's information, and the indicator is translated in a service switching system into the local number for that service. Advantageously, a user of mobile telephone service need not learn the local numbers for these services.

In WO 99/16181 a graphical user interface (GUI) for a portable telephone is disclosed. The GUI provides a Universal Mailbox for storing both electronic mail and voicemail messages, either of which can be accessed by a user from the same display screen. An automatic reply feature allows a user to initiate an outgoing reply to a received message with the touch of a button. For a reply to a voicemail message, the GUI accesses Caller ID information to automatically identify and dial out to the phone number of the sender of the original message. For an electronic mail reply, the GUI automatically displays a reply form addressed to the source address. An advanced call control feature automatically checks an outgoing telephone number against a database to determine whether the phone number is currently appropriate.

In JP 11-187455 a communication equipment and method are disclosed, which allow a communication equipment such as a mobile communication terminal available in the entire world to easily make a speech with a desired speed destination in countries and all the regions of the world. While a speech destination selection menu is displayed on a display section, when the user designates a desired speech destination such as 'police station' or 'embassy' through a pen touch, police station information or embassy information within the user's jurisdiction is retrieved among worldwide police station information or embassy information stored in cross reference with position information in a speech destination/guide data memory in a ROM based on a current position information on the earth detected by a GPS and stored in advance in a position information data memory in a RAM and its telephone number or the like is read and displayed. Then the user can easily obtain speech destination information such as required public agency within the user's jurisdiction, even in any country or region of the world and then the user can immediately make dialing to the desired speech destination and makes a speech.

### DISCLOSURE OF INVENTION

This invention provides a method for providing an emergency call to a mobile network, a mobile terminal for providing an emergency call to a mobile network, and a smart card operational within a mobile terminal providing an emergency call to a mobile network, as defined in the appended claims.

When roaming internationally, it will be convenient for the user to be able to use the emergency numbers that she is accustomed to using in order to reach emergency services of different types. It will also be convenient for the user to obtain display information about the various emergency services available, prior to actually contacting those emergency services. This invention thus enhances the use of emergency numbers in a mobile telecommunications network, allowing the user to make a variety of emergency calls having a plurality of different functions.

According to this invention, an emergency call is set up in a special way, in the context of the mobile communication network. The emergency call is routed to the closest emergency center (s), depending upon what kind of an emergency is involved.

This invention permits an alpha identifier to be added to the emergency call number. This alpha tag allows the user to access a display in order to identify the type of emergency center to which the emergency call will be connected. The display information is stored in the USIM within the mobile phone. Furthermore, the invention defines a service category that can be used in the network to route the emergency call to the appropriate emergency center (police, ambulance, fire brigade, etc.).

The alpha tagging solves the problem of indicating to the user which emergency service can be called. The service category solves the problem of giving a location-independent indication to the network of what type emergency service is requested.

The invention discloses a new and unique method for providing an emergency call by a user of a mobile phone to a mobile phone network, comprising two unique steps: (1) inputting an emergency call number to a mobile phone; and (2) attaching to the emergency call number a location-independent emergency service category that is identified by each mobile network in the same way regardless of country. The location-independent emergency service category (also known as a call type indicator) identifies emergencies such as general rescue, police ambulance, fire, or a combination thereof. The emergency call number is typically provided by a user in an emergency situation where there is a need for one or more of the aforementioned emergency services. Another step of this method includes attaching to an emergency call code an emergency call code alpha tag identifier so that once a user has dialed an emergency number the user may scroll a display of the mobile phone for available emergency services, for example, in case the emergency number entered did not correspond to a desired emergency service. The entering of the emergency number would act as a trigger to view emergency services numbers to the user. After a predetermined time, an emergency call having a location-independent emergency service category attached thereto would be provided to the mobile network if an alternative emergency call number is not selected by the user.

This method also includes automatically routing the emergency call to a corresponding emergency call center in the mobile network. The method further includes maintaining an emergency call code data file in the mobile phone with the location-independent emergency, service categories, the emergency call code, and/or the emergency call code alpha tag identifier.

### BRIEF DESCRIPTION OF THE DRAWINGS

Figure 1 shows an example of a wireless telecommunications architecture in which the present invention can operate.
Figure 2 is a flow chart illustrating an embodiment of the present invention.
Figure 3 show a mobile terminal according to an embodiment of the present invention.
Figure 4 illustrates a system according to an embodiment of the present invention.

### BEST MODE FOR CARRYING OUT THE INVENTION

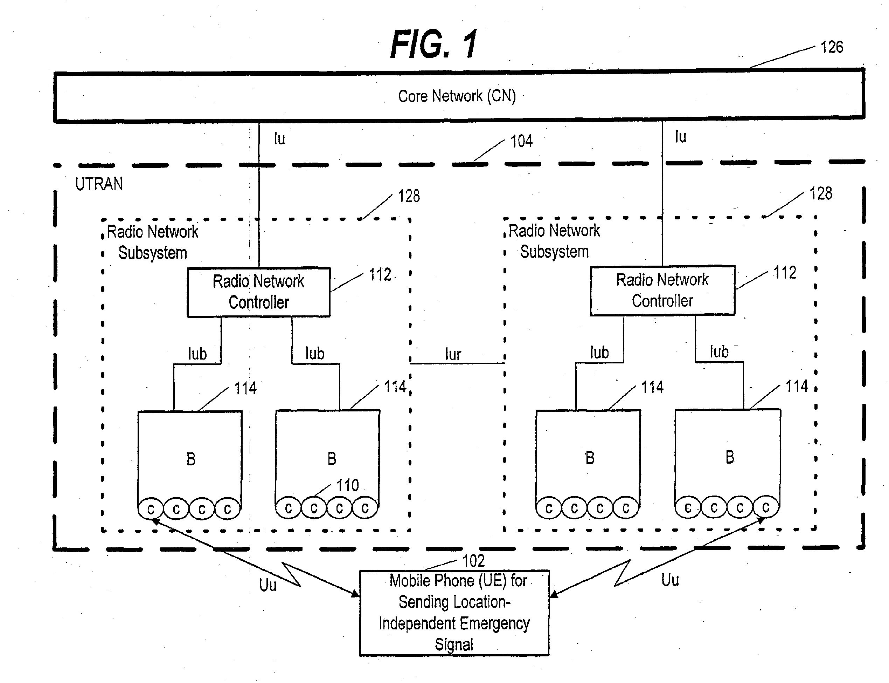

In order to explain best mode embodiments of the present invention, it will be useful to consider the telecommunications infrastructure in which the invention operates. This is exemplified by Figure 1, which shows the structure of a wireless system according to the 3GPP Telecommunications System (3GPP is synonymous with WCDMA or wideband code division multiple access, and with GSM or global system for mobile communication). As can be seen in Figure 1, the 3GPP architecture consists of user equipment **102** (UE which is herein synonymous with "mobile device," "terminal equipment" and "emergency-equipped mobile phone"), the 3G Terrestrial Radio Access Network **104** (UTRAN), and the Core Network **126** (CN). The air interface between the UTRAN and the UE is called Uu, and the interface between the UTRAN and the Core Network is called Iu. The UTRAN consists of a set of Radio Network Subsystems **128** (RNS), each of which has geographic coverage of a number of cells **110** (C). The interface between the subsystems is called lur. Each Radio Network Subsystem **128** (RNS) includes a Radio Network Controller **112** (RNC) and at least one Node B **114,** each Node B having geographic coverage of at least one cell **110** (a Node B is synonymous with a base station). As can be seen from Figure 1, the interface between an RNC **112** and a Node B **114** is called Iub, and the Iub is hardwired rather than being an air interface. For any Node B **114** there is only one RNC **112.** A Node B **114** is responsible for radio transmission and reception to and from the UE **102** (Node B antennas can typically be seen atop tall towers or preferably at less conspicuous locations). The RNC **112** has overall control of the logical resources of each Node B **114** within the RNS **128,** and the RNC **112** may also be responsible for handover decisions which entail switching a call from one cell to another or between radio channels in the same cell.

According to a best embodiment of the present invention, a location-independent emergency service category can be attached to the emergency call number. This service category is identified by each network in the same way regardless of location or country. Call types like general emergency, police, ambulance, fire brigade, and/or rescue are defined in the corresponding coding.

In addition to this, the contents of the emergency call code data file (EF_{ECC}) is modified in order to allow an alpha tag to be attached to an emergency call code. This means, for example, that the user, once she has dialed a number in an emergency, can scroll the display for available emergency services, for example if the entered number did not correspond to the required emergency service category. In other words, entering an emergency number which does not go through acts as a trigger to display the available emergency service numbers to the user, along with other emergency information. If a displayed alternative is not selected by the user within a defined time, the call is set up to an emergency number and the emergency service category (for example a general emergency category) is indicated to the network.

According to this embodiment of the best mode, the network, based on the emergency service category indicated in the call setup, is able to route the emergency call to the corresponding emergency center. Thus, the mobile terminal translates user input into a location-independent (i.e. internationally standardized) code which is sent to the network, and then the network translates the code into whatever numbers are necessary in the local geographic region. The emergency number dialed by the user in this case can be delivered to the network as well, although this is not essential.

The following modifications, for instance, could be made to the EF_{ECC} on the UICC, as part of implementing this invention:

| Identifier: | Structure: linear fixed | | Mandatory | |
|---|---|---|---|---|
| Record size: X + 6 bytes | | Update activity: low | | |
| Access Conditions: | | | | |
| READ | ALW | | | |
| UPDATE | ADM | | | |
| DEACTIVATE | ADM | | | |
| ACTIVATE | ADM | | | |

| Bytes | Description | | M/O | Length |
|---|---|---|---|---|
| 1 to 3 | Emergency Call Code 1 | | M | 3 bytes |
| 4 to X+4 | Emergency Call Code Alpha Identifier | | O | X bytes |
| X+5 to X+6 | Emergency Service Category | | M | 1 byte |
| | | | | |

The main thing to notice about this EF_{ECC} is that, under the description heading, the following items are listed:

| |
|---|
| Description |
| Emergency Call Code 1 |
| Emergency Call Code Alpha Identifier |
| Emergency Service Category |
| |

In order to more completely describe a best mode embodiment of the present invention, let us suppose that a U.S. citizen ("Pat") has an emergency in some arbitrary country. Pat may want to call a general emergency number, or she might prefer to directly call the specific type of emergency service that she needs.

According to the present invention, Pat can be located anywhere in the world, and she can simply dial a particular number established in her smart card (e.g. 911) in order to reach the local general emergency center. The smart card provides a location-independent emergency service category for Pat's "911" emergency call code, and then the radio network subsystem retranslates the location-independent emergency signal into the local general emergency telephone number corresponding to the local geographic area where Pat's base station is located. Then Pat is patched through to the local emergency personnel.

However, suppose Pat wants to find out what kind of emergency services are available before calling a general emergency center. Pat's mobile phone is structured and programmed so that she can dial a particular number (e.g. *911) in order to bring up a display of available emergency centers. This information has been stored in Pat's mobile phone, for example in the USIM, and can be accessed using the alpha tagging.

The specific numbers just mentioned are examples only, and people native to different countries might choose different numbering schemes; their mobile terminals could be programmed accordingly. However, the service category sent from the mobile terminal to the network would be location-independent; i.e. one service category would always indicate fire, one service category would always indicate police, et cetera, regardless of what country the user is located in.

When Pat chooses to access the emergency display, or is given the display for some other reason, then Pat can select a particular emergency number to call. The display's user interface can allow Pat to simply click on the particular facility or facility phone number that she desires to call, and the result would then be the same as if Pat had entered particular emergency phone numbers using the keyboard. The display may have multiple layers of information, and the display information which is read from the USIM may be updated by the network operator if there are changes to the national scheme.

The mobile terminal may additionally or alternatively be equipped with an emergency button and/or other trigger (such as a voice trigger or a trigger related to air bag deployment) that automatically dials for general emergency assistance; thus, Pat would not necessarily have to use the keyboard to get help. An emergency button could initiate a call for an ambulance (A911), or alternatively could initiate a general emergency call (911), although the former type of call may be preferable, because especially in medical emergencies a mobile terminal user will prefer not to study a keyboard and carefully choose the digits to dial.

Whenever Pat makes any kind of emergency call, it is possible for the radio network subsystem to be programmed so as to initiate an additional separate call or message which is automatic and computer-generated; this automatic message could be sent from the radio network subsystem to a general emergency center corresponding to the base station that is communicating with Pat over the wireless interface (thus there could be two emergency calls instead of just one). The automatic message would, for example, report that Pat initiated an emergency wireless call, report the specific type of emergency center requested by Pat if any, report Pat's mobile phone number, report where the base station is located, and report the time of Pat's emergency wireless call. This automatic message would be in the local language, and therefore would help to ensure that Pat receives the help she needs, even if she cannot speak the local language. Even if Pat does speak the local language, the automated message could still be helpful to the authorities by providing information about Pat's location and the type of emergency.

Additionally, the mobile phone could be designed so as to emit a distress signal whenever a call is placed to an emergency center, so that emergency personnel would be able to locate the mobile phone user once the emergency personnel are near the base station. The beacon could be turned off by simply turning off the mobile phone's power. Details about the distress signal (e.g. frequency and signal strength) could be part of the automatic computer-generated report from the radio network subsystem to the general emergency center.

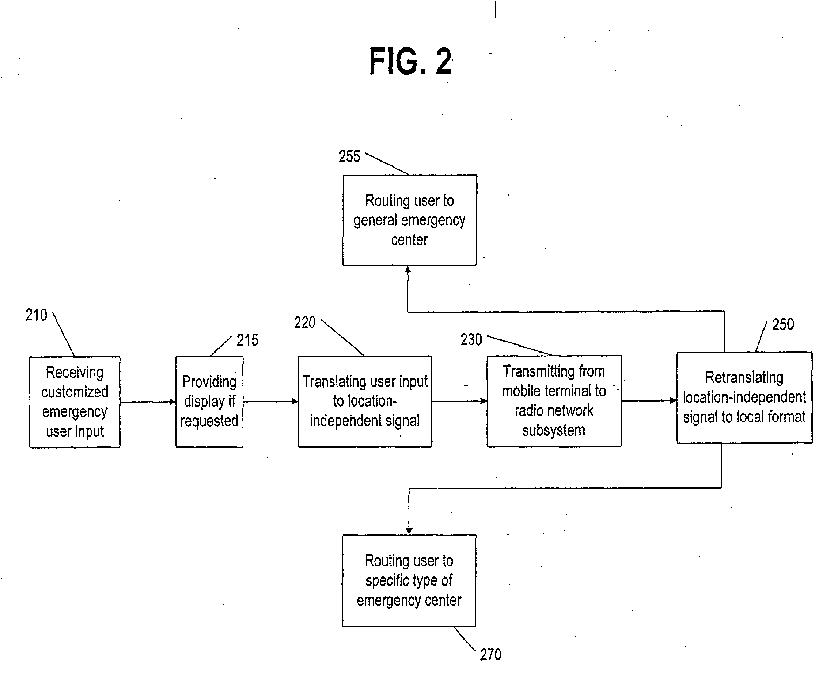

The method according to a best mode of the present invention is shown in Figure 2. This method allows a user of a mobile terminal to make an emergency call to the radio network subsystem **128** (shown in Figure 1) in a wireless telecommunications network **104** (see Figure 1), when the user is located in a foreign country or a home country. The first step is receiving **210** customized emergency user input at a mobile terminal. In other words, the mobile terminal can be programmed so as to customize the particular keystrokes necessary to make an emergency call. For example, a U.S. user might prefer numbers like 911, compared to Japanese citizens who might prefer numbers like 110, 118, and 119. This required emergency user input does not change when the mobile terminal is taken across an international border, so, for example, the Japanese citizen who visits the United States can still dial numbers like 110, 118, and 119 on her mobile terminal. The emergency user input is selected from a plurality of allowed emergency user inputs, meaning that the present system offers more options than simply dialing 911. As discussed already, other options include dialing for specific types of emergency assistance.

Following input by the user, the mobile device may display, in a step **215,** emergency service options, and the user may then select one of these options; these options come from alpha tag information contained in the EF_{ECC} which is located in the USIM. The next step is for the mobile device to translate **220** the emergency user input into a location-independent emergency signal corresponding to the emergency user input, wherein the location-independent emergency signal is included within a plurality of different allowed location-independent emergency signals having different respective functions, such as calling for an ambulance, calling for the fire department, calling for police, or calling for a display of local emergency information. Then the mobile terminal transmits **230** information contained in the location-independent emergency signal from the mobile terminal to a radio network subsystem over an air interface, the radio network subsystem including a base station with which the mobile terminal is in direct wireless communication.

Then the radio network subsystem (RNS) may retranslate **250** the information contained in the location-independent emergency signal, in order to obtain a format corresponding to the local area in which the base station is located. In other words, in order for the RNS to establish a connection with an emergency center, it may be necessary for the RNS to determine and dial a normal local telephone number for the emergency center. Then the user call can be routed **255** to a general emergency center which corresponds to a base station that is communicating with the user over a wireless interface, or the RNS routes **270** the user call to a specific type of emergency center which corresponds to a base station that is communicating with the user over the wireless interface.

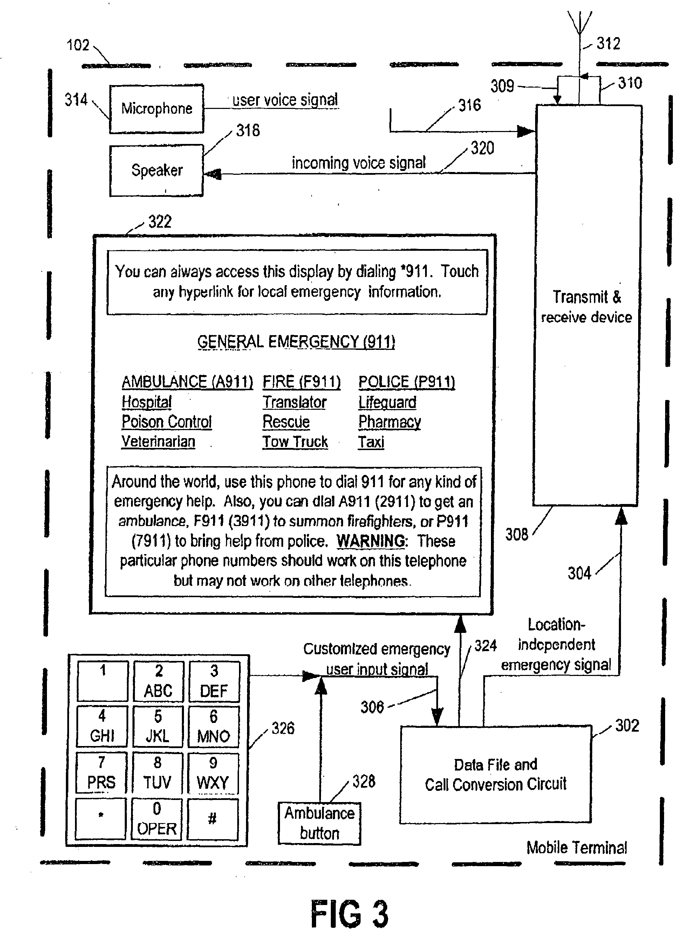

Figure 3 illustrates a mobile terminal designed to implement the present method, according to an embodiment of the best mode. Figure 3 is illustrative of the mobile terminal **102,** and also of the method which it implements as already discussed.

The mobile terminal **102** includes a data file and call conversion circuit **302** which may be a smart card, for example, containing an EF_{ECC} file. This circuit provides a location-independent emergency signal **304,** which means that the various different formats of this signal **304** are standardized, but does not mean that this signal **304** will always be the same (i.e. the user can determine which of the location-independent formats is contained in the signal **304**). The circuit **302** is responsive to a customized emergency user input signal **306** having a magnitude indicative of a user seeking selected emergency assistance, and the required emergency user input does not change when the mobile terminal **102** is taken to another country.

The mobile terminal includes transmit and receive device **308,** which is responsive to a raw incoming transmitted signal **309** received via an antenna **312,** and the transmit and receive device **308** is also responsive to the location-independent emergency signal **304.** The transmit and receive device **308** is, of course, for providing an outgoing transmission signal **310.** The customized emergency user input signal **306** is selected from a plurality of allowed emergency user input signals that can be programmably customized to suit the user, meaning, for example, that the user will have a keyboard numbering scheme that the user prefers for emergency situations. Mobile terminals marketed in a particular country can be preprogrammed in order to accommodate the numbering schemes most popular in that particular country. The location-independent emergency signal **304** is included within a plurality of different allowed location-independent emergency signals having different respective functions which are effectuated by the outgoing transmission signal **310.** Therefore, not only can users punch in a variety of different phone numbers to obtain an identical result, but also they can obtain different results if the numbers are properly selected.

As is customary for a mobile terminal, the terminal shown in Figure 3 includes a microphone **314,** responsive to audio input from the user, for providing a user voice signal **316.** Likewise, Figure 3 also shows a speaker **318,** responsive to an incoming voice signal **320,** for providing audio output to the user. The incoming voice signal **320** contains information from a general emergency center corresponding to a base station that is communicating with the user over the wireless interface.

The mobile terminal **102** shown in Figure 3 also includes a display screen **322,** which is responsive to a display signal **324** from the data file and call conversion circuit **302,** and the display screen **322** is for providing the user with at least one emergency services display containing emergency information stored in the data file and call conversion circuit **302.** This display will occur if the customized emergency user input signal **304** involves an alpha tag (e.g. if the user dials *911). A sample display is shown in Figure 3, and the display may allow the user to activate various hyperlinks to obtain particular types of emergency assistance. A useful feature would be to be able to click on a particular item on the display so that the call will be put through automatically without dialing.

If the user wants to contact a specific type of emergency center, then that is allowed by the mobile terminal **102.** In that case, the location-independent emergency signal **304** includes an emergency service category indicating the type of emergency call.

As is clear from Figure 3, the mobile terminal has a keypad **326** for providing the customized emergency user input signal **306** (in response to customized emergency input). However, the customized emergency user input signal **306** may alternatively be provided by an ambulance button **328.**

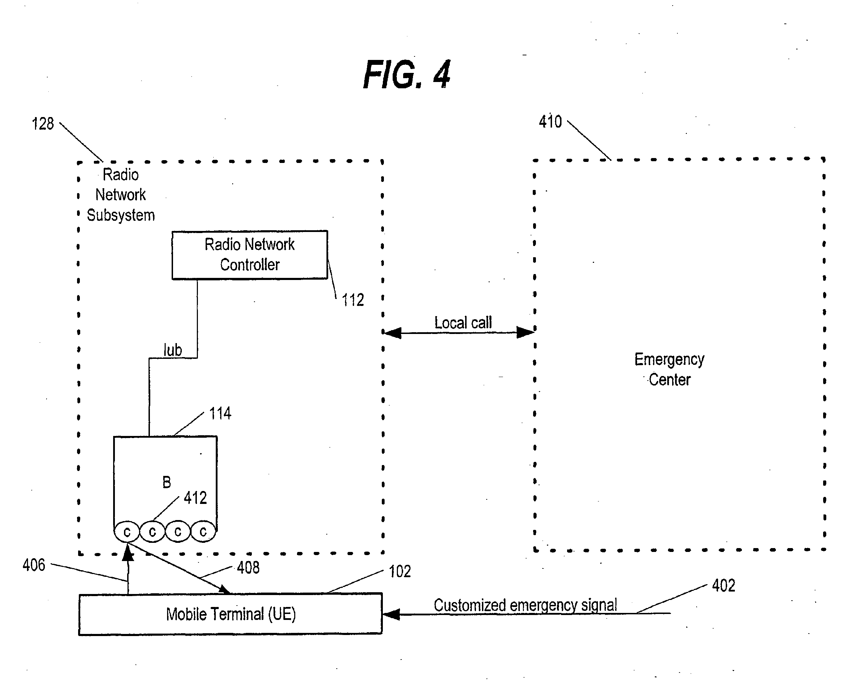

Figure 4 shows a systematic overview of the present invention according to a, best mode embodiment. The mobile terminal **102** can make different categories of emergency calls, having a plurality of different respective functions, to the radio network subsystem **128** (see Figure 1) in a wireless telecommunications network, when the user is located in a foreign country or a home country. The mobile terminal **102** is responsive to a customized emergency signal **402** having a magnitude indicative of selected emergency assistance sought by the user, and the mobile terminal is for providing a location-independent emergency transmission signal **406** that is selected from a plurality of different allowed location-independent emergency transmission signals having different respective functions. The radio network subsystem **128** is responsive to the location-independent emergency transmission signal **406,** and is for providing to the mobile terminal **102** an emergency response signal **408.** The customized emergency signal **402** is selected by the user from a plurality of allowed emergency user input signals in a manner that is programmably customized to suit the user and in a manner that need not change as a result of the mobile terminal **102** being taken from one country to another.

The radio network subsystem **128** includes a base station **114** in direct wireless communication with the mobile terminal **102** over a wireless interface, and a radio network controller 112 in communication with the base station 114. This is shown by both Figure 1 and by Figure 4.

If the location-independent emergency transmission signal 406 contains a service category, then the emergency response signal 408 will include the downlink portion of a call between the user and a specific type of emergency center. The emergency center, of course, will be chosen so as to correspond geographically to the base station with which the mobile terminal is communicating, and also so as to correspond to the service category.

The system shown in Figure 4 also includes an emergency center 410 communicating with the user via the radio network subsystem 128. The radio network subsystem 128 establishes the communication between the user and the emergency center, and may do this by translating the location-independent emergency transmission signal 406 into a corresponding local telephone call.

It will also be understood by those skilled in the art that the blocks and signal depicted in the Figures may be rearranged in numerous and sundry ways, and that these blocks represent combinations of hardware and software which can be implemented in a variety of ways, and furthermore that these signals represent general cause and effect relationships without precluding intervening occurrences and suchlike.

Although this invention has been shown and described with respect to a best mode embodiment thereof, it should be understood by those skilled in the art that the foregoing and various other changes, omissions and additions in the form and detail thereof may be made therein within the scope of this invention as defined by the appended claims.

## Claims

1. A method for providing an emergency call to a mobile network, comprising:
receiving (210) an emergency call code in a mobile terminal from a user;
providing (215) an emergency call code alpha tag identifier, indicative of an emergency, to a display of the mobile terminal, in response to the emergency call code, wherein the emergency call code alpha tag identifier enables the user to obtain, from the display of the mobile terminal, emergency information usable for choosing a location-independent emergency service category that is identified by each mobile network in the same way;
receiving (220) a chosen location-independent emergency service category from the user;
attaching (220) to the emergency call code the chosen location-independent emergency service category; and
sending (230) the location-independent emergency service category from the mobile terminal to the mobile network with the emergency call.

2. A method according to claim 1, wherein available emergency services are stored within the mobile terminal or within a universal subscriber identity module located within the mobile terminal.

3. A method according to claim 2, wherein the method further comprises:
providing after a predetermined time an emergency call if an alternative is not selected by the user.

4. A method according to claim 1 or 2, wherein the method further comprises:
maintaining an emergency call code data file in the mobile terminal, wherein each emergency service category corresponds to an emergency center.

5. A method according to claim 4, wherein the emergency call code data file stores the location-independent emergency service category, the emergency call code for at least one country, and an emergency call code alpha tag identifier.

6. A method according to claim 4 or 5, wherein the emergency call code data file is stored on a smart card.

7. A method according to any one of claims 1 to 6, wherein the location-independent emergency service category identifies emergencies, including general rescue, police ambulance, fire, or a combination thereof.

8. A mobile terminal (102) for providing an emergency call to a mobile network, comprising:
means for receiving an emergency call code in the mobile terminal from a user; and
means for providing an emergency call code alpha tag identifier, indicative of an emergency, to a display of the mobile terminal, in response to the emergency call code, wherein the emergency call code alpha tag identifier enables the user to obtain, from the display of the mobile terminal, emergency information usable for choosing a location-independent emergency service category that is identified by each mobile network in the same way;
means for receiving a chosen location-independent emergency service category from the user;
means for attaching to the emergency call code the chosen location-independent emergency service category; and
means for sending the location-independent emergency service category from the mobile terminal to the mobile network with the emergency call.

9. The mobile terminal according to claim 8, further comprising:
means for maintaining an emergency call code data file in the mobile terminal, wherein each emergency service category corresponds to an emergency center.

10. The mobile terminal according to claim 9, wherein the emergency call code data file stores the location-independent emergency service category, the emergency call code for at least one country, and an emergency call code alpha tag identifier.

11. The mobile terminal according to claim 9 or 10, wherein the emergency call code data file is stored on a smart card.

12. The mobile terminal according to any one of claims 8 to 11, wherein the location-independent emergency service category identifies emergencies, including general rescue, police ambulance, fire, or a combination thereof.

13. The mobile terminal according to any one of claims 8 to 12, which is configured for allowing the user to make different categories of emergency calls having a plurality of different respective functions, when the user is located in a foreign country or a home country, comprising:
a data file and call conversion circuit (302) configured to provide a location-independent emergency signal (304), responsive to a customized emergency user input signal (306) indicative of the user seeking selected emergency assistance, wherein required emergency user input does not change when the mobile terminal (102) is taken across an international border;
a transmit and receive device (308), responsive to the location-independent emergency signal (304), configured to provide an outgoing transmission signal (310),
wherein the customized emergency user input signal (306) is selectable from a plurality of allowed emergency user input signals that are programmably customized to suit the user,
wherein the location-independent emergency signal (304) is selectable from a plurality of different allowed location-independent emergency signals, and
wherein the emergency call code alpha tag identifier is configured to signal a display (322) to allow the user to obtain from the mobile terminal the emergency information.

14. The mobile terminal according to claim 13, further comprising:
a microphone (314), responsive to audio input from the user, for providing a user voice signal (316); and
a speaker (318), responsive to an incoming voice signal (320), for providing audio output to the user,
wherein the incoming voice signal (320) contains information from a general emergency center, and
wherein the mobile terminal (102) further comprises a display screen (322), responsive to a display signal (324) which is initiated by the user and has a signal component indicative of the emergency call code alpha tag identifier, the display screen (322) being for providing the user with at least one emergency services display containing emergency call information to assist the user in selecting the customized emergency user input signal (306), or the incoming voice signal (320) contains information from a specific type of emergency center nearest to a base station that is communicating with the mobile terminal over a wireless interface, if the location-independent emergency signal (304) includes an emergency call code, and also includes a service category indicating the type of emergency call.

15. The mobile terminal according to claim 14, wherein the display signal (324) is provided by the data file and call conversion circuit (302).

16. The mobile terminal according to any one of claims 13 to 15, wherein the data file and call conversion circuit (302) is a programmable smart card which is removably located in the mobile terminal (102).

17. The mobile terminal according to any one of claims 13 to 16, wherein an emergency call code data file is stored in a smart card which is removable from the mobile terminal, and wherein the emergency call code data file provides information about the emergency call number, the emergency call code alpha tag identifier and the service category.

18. The mobile terminal according to any one of claims 13 to 17, wherein the display screen (322) displaying the at least one emergency services display allows the user to automatically place a call by selecting an emergency service.

19. The mobile terminal according to any one of claims 14 to 18, further comprising a keypad (326) for providing the customized emergency user input signal (306) in response to customized emergency input.

20. The mobile terminal according to any one of claims 14 to 19, further comprising an emergency button (328) for providing the customized emergency user input signal (306) in response to user input, and wherein the specific type of emergency center is general rescue, police, ambulance, or fire department.

21. A smart card operational within a mobile terminal for providing an emergency call to a mobile network, the smart card comprising an emergency call code data file that further comprises an emergency call number, an emergency call code alpha tag identifier, and a location-independent emergency service category, wherein the emergency call code data file is for translating emergency data from a format which was input by a user into a format that is location-independent, wherein the emergency call code alpha tag identifier enables the user to obtain, from a display of the mobile terminal, emergency information usable for choosing the location-independent emergency service category, wherein the smart card enables the mobile terminal to perform:
providing the emergency call code alpha tag identifier, indicative of an emergency, to a display of the mobile terminal, in response to an emergency call code being received from the user;
attaching to the emergency call code a chosen location-independent emergency service category being received from the user, that is identified by each mobile network in the same way; and
sending the location-independent emergency service category from the mobile terminal to the mobile network with the emergency call.

## Patentansprüche

1. Verfahren zum Liefern eines Notrufs an ein Mobilnetzwerk, mit:
Empfangen (210) eines Notrufcodes in einem Mobilendgerät von einem Benutzer;
Liefern (215) eines Notrufcode-Alpha-Tag-Bezeichners, der für einen Notfall bezeichnend ist, an eine Anzeige des Mobilendgeräts in Erwiderung auf den Notrufcode, wobei der Notrufcode-Alpha-Tag-Bezeichner dem Benutzer ermöglicht, von der Anzeige des Mobilendgeräts Notfallinformationen zu erhalten, die zum Auswählen einer ortsunabhängigen Notfalldienstkategorie verwendbar sind, die durch jedes Mobilnetzwerk in der gleichen Art und Weise identifiziert werden;
Empfangen (220) einer ausgewählten ortsunabhängigen Notfalldienstkategorie von dem Benutzer;
Anhängen (220) der ausgewählten ortsunabhängigen Notfalldienstkategorie an den Notrufcode; und
Senden (230) der ortsunabhängigen Notfalldienstkategorie von dem Mobilendgerät an das Mobilnetzwerk mit dem Notruf.

2. Verfahren gemäß Anspruch 1, wobei verfügbare Notfalldienste in dem Mobilendgerät oder in einem in dem Mobilendgerät befindlichen Universalteilnehmeridentitätsmodul gespeichert sind.

3. Verfahren gemäß Anspruch 2, wobei das Verfahren zusätzlich aufweist:
Liefern eines Notrufs nach einer vorbestimmten Zeit, wenn keine Alternative durch den Benutzer ausgewählt wird.

4. Verfahren gemäß Anspruch 1 oder 2, wobei das Verfahren zusätzlich aufweist:
Halten einer Notrufcodedatendatei in dem Mobilendgerät, wobei jede Notfalldienstkategorie einer Notfallzentrale entspricht.

5. Verfahren gemäß Anspruch 4, wobei die Notrufcodedatendatei die ortsunabhängige Notfalldienstkategorie, den Notrufcode für zumindest ein Land und einen Notrufcode-Alpha-Tag-Bezeichner speichert.

6. Verfahren gemäß Anspruch 4 oder 5, wobei die Notrufcodedatendatei auf einer Chipkarte gespeichert ist.

7. Verfahren gemäß einem der Ansprüche 1 bis 6, wobei die ortsunabhängige Notfalldienstkategorie Notfälle identifiziert, die allgemeine Rettung, Polizei, Krankenwagen, Feuer oder eine Kombination von diesen umfassen.

8. Mobilendgerät (102) zum Liefern eines Notrufs an ein Mobilnetzwerk, mit:
einer Einrichtung zum Empfangen eines Notrufcodes in einem Mobilendgerät von einem Benutzer;
einer Einrichtung zum Liefern eines Notrufcode-Alpha-Tag-Bezeichners, der für einen Notfall bezeichnend ist, an eine Anzeige des Mobilendgeräts in Erwiderung auf den Notrufcode, wobei der Notrufcode-Alpha-Tag-Bezeichner dem Benutzer ermöglicht, von der Anzeige des Mobilendgeräts Notfallinformationen zu erhalten, die zum Auswählen einer ortsunabhängigen Notfalldienstkategorie verwendbar sind, die durch jedes Mobilnetzwerk in der gleichen Art und Weise identifiziert werden;
einer Einrichtung zum Empfangen einer ausgewählten ortsunabhängigen Notfalldienstkategorie von dem Benutzer;
einer Einrichtung zum Anhängen der ausgewählten ortsunabhängigen Notfalldienstkategorie an den Notrufcode; und
einer Einrichtung zum Senden der ortsunabhängigen Notfalldienstkategorie von dem Mobilendgerät an das Mobilnetzwerk mit dem Notruf.

9. Mobilendgerät gemäß Anspruch 8, zusätzlich mit:
einer Einrichtung zum Halten einer Notrufcodedatendatei in dem Mobilendgerät, wobei jede Notfalldienstkategorie einer Notfallzentrale entspricht.

10. Mobilendgerät gemäß Anspruch 9, wobei die Notrufcodedatendatei die ortsunabhängige Notfalldienstkategorie, den Notrufcode für zumindest ein Land und einen Notrufcode-Alpha-Tag-Bezeichner speichert.

11. Mobilendgerät gemäß Anspruch 9 oder 10, wobei die Notrufcodedatendatei auf einer Chipkarte gespeichert ist.

12. Mobilendgerät gemäß einem der Ansprüche 8 bis 11, wobei die ortsunabhängige Notfalldienstkategorie Notfälle identifiziert, die allgemeine Rettung, Polizei, Krankenwagen, Feuer oder eine Kombination von diesen umfassen.

13. Mobilendgerät gemäß einem der Ansprüche 8 bis 12, das konfiguriert ist, dem Benutzer zu ermöglichen, unterschiedliche Kategorien von Notrufen mit einer Vielzahl von unterschiedlichen jeweiligen Funktionen vorzunehmen, wenn sich der Benutzer im Ausland oder im Heimatland befindet, mit:
einer Datendatei- und Rufwandlungsschaltung (302), die konfiguriert ist zum Liefern eines ortsunabhängigen Notfallsignals (304) in Erwiderung auf ein individualisiertes Notfallbenutzereingabesignal (306), das dafür bezeichnend ist, dass der Benutzer eine ausgewählte Notfallunterstützung nachsucht, wobei sich eine erforderliche Notfallbenutzereingabe nicht ändert, wenn das Mobilendgerät (102) über eine internationale Grenze gebracht wird;
einer Sende- und Empfangsvorrichtung (308), die konfiguriert ist zum Liefern eines abgehenden Sendesignals (310) in Erwiderung auf das ortsunabhängige Notfallsignal (304),
wobei das individualisierte Notfallbenutzereingabesignal (306) aus einer Vielzahl von zulässigen Notfallbenutzereingabesignalen auswählbar ist, die in programmierbarer Art und Weise individualisiert sind, um für den Benutzer zu passen,
wobei das ortsunabhängige Notfallsignal (304) aus einer Vielzahl von unterschiedlichen zulässigen ortsunabhängigen Notsignalen auswählbar ist, und
wobei der Notrufcode-Alpha-Tag-Bezeichner konfiguriert ist, einer Anzeige (322) zu signalisieren, dem Benutzer zu ermöglichen, die Notfallinformationen von dem Mobilendgerät zu erhalten.

14. Mobilendgerät gemäß Anspruch 13, zusätzlich mit:
einem Mikrofon (314) zum Liefern eines Benutzersprachsignals (316) in Erwiderung auf eine Audioeingabe von dem Benutzer; und
einem Lautsprecher (318) zum Liefern einer Audioausgabe an den Benutzer in Erwiderung auf ein eingehendes Sprachsignal (320),
wobei das eingehende Sprachsignal (320) Informationen von einer allgemeinen Notfallzentrale enthält, und
wobei das Mobiltelefon (102) zusätzlich einen Anzeigebildschirm (322) aufweist, der auf ein Anzeigesignal (324) anspricht, das durch den Benutzer initiiert wird und eine Signalkomponente aufweist, die für den Notrufcode-Alpha-Tag-Bezeichner bezeichnend ist, wobei der Anzeigebildschirm (322) zum Beliefern des Benutzers mit zumindest einer Notfalldiensteanzeige dient, die Notrufinformationen enthält, um den Benutzer beim Auswählen des individualisierten Notfallbenutzereingabesignals (306) zu unterstützen, oder das eingehende Sprachsignal (320) Informationen von einem speziellen Typ von Notfallzentrale enthält, die sich am nächsten zu einer Basisstation befindet, die mit dem Mobilendgerät über eine drahtlose Schnittstelle kommuniziert, wenn das ortsunabhängige Notfallsignal 8304) einen Notrufcode umfasst, und auch eine Dienstkategorie umfasst, die den Typ von Notruf bezeichnet.

15. Mobilendgerät gemäß Anspruch 14, wobei das Anzeigesignal (324) durch die Datendatei- und Rufwandlungsschaltung (302) geliefert wird.

16. Mobilendgerät gemäß einem der Ansprüche 13 bis 15, wobei die Datendatei- und Rufwandlungsschaltung (302) eine programmierbare Chipkarte ist, die sich austauschbar in dem Mobilendgerät (102) befindet.

17. Mobilendgerät gemäß einem der Ansprüche 13 bis 16, wobei eine Notrufcodedatendatei in einer Chipkarte gespeichert ist, die aus dem Mobilendgerät entfernbar ist, und wobei die Notrufcodedatendatei Informationen über die Notrufnummer, den Notrufcode-Alpha-Tag-Bezeichner und die Dienstkategorie bereitstellt.

18. Mobilendgerät gemäß einem der Ansprüche 13 bis 17, wobei der Anzeigebildschirm (322), der die zumindest eine Notfalldiensteanzeige anzeigt, dem Benutzer ermöglicht, durch Auswahl eines Notfalldiensts einen Ruf automatisch vorzunehmen.

19. Mobilendgerät gemäß einem der Ansprüche 14 bis 18, zusätzlich mit einem Tastenfeld (326) zum Liefern des individualisierten Notfallbenutzereingabesignals (306) in Erwiderung auf eine individualisierte Notfalleingabe.

20. Mobilendgerät gemäß einem der Ansprüche 14 bis 19, zusätzlich mit einer Notfalltaste (328) zum Liefern des individualisierten Notfallbenutzereingabesignals (306) in Erwiderung auf eine Benutzereingabe, und wobei der spezielle Typ von Notfallzentrale allgemeine Rettung, Polizei, Ambulanz oder Feuerwehr ist.

21. Chipkarte, die in einem Mobilendgerät zum Liefern eines Notrufs an ein Mobilnetzwerk betriebsfähig ist, wobei die Chipkarte eine Notrufcodedatendatei aufweist, die ferner eine Notrufnummer, einen Notrufcode-Alpha-Tag-Bezeichner und eine ortsunabhängige Notfalldienstkategorie aufweist, wobei die Notrufcodedatendatei zum Umsetzen von Notfalldaten aus einem Format, das durch einen Benutzer eingegeben wurde, in ein Format dient, das ortsunabhängig ist, wobei der Notrufcode-Alpha-Tag-Bezeichner dem Benutzer ermöglicht, Notfallinformationen, die zum Auswählen der ortsunabhängigen Notfalldienstkategorie verwendbar sind, von einer Anzeige des Mobilendgeräts zu erhalten, wobei die Chipkarte ermöglicht, dass das Mobilendgerät durchführt:
Liefern des Notrufcode-Alpha-Tag-Bezeichners, der für einen Notfall bezeichnend ist, an eine Anzeige des Mobilendgeräts in Erwiderung darauf, dass ein Notrufcode von dem Benutzer empfangen wird;
Anhängen einer von dem Benutzer empfangenen ausgewählten ortsunabhängigen Notfalldienstkategorie, die durch jedes Mobilnetzwerk in der gleichen Art und Weise identifiziert wird, an den Notrufcode; und
Senden der ortsunabhängigen Notfalldienstkategorie von dem Mobilendgerät an das Mobilnetzwerk mit dem Notruf.

## Revendications

1. Procédé permettant de fournir un appel d'urgence à un réseau mobile, comprenant les étapes consistant à :
recevoir (210) un code d'appel d'urgence dans un terminal mobile en provenance d'un utilisateur ;
fournir (215) un identifiant d'étiquette alphabétique de code d'appel d'urgence, indiquant une situation d'urgence, à un écran d'affichage du terminal mobile, en réponse au code d'appel d'urgence; dans lequel l'identifiant d'étiquette alphabétique de code d'appel d'urgence permet à l'utilisateur d'obtenir, à partir de l'écran d'affichage du terminal mobile, des informations d'urgence utilisables pour choisir une catégorie de service d'urgence indépendante de la localisation qui est identifiée par chaque réseau mobile de la même manière ;
recevoir (220) une catégorie de service d'urgence indépendante de la localisation choisie en provenance de l'utilisateur ;
rattacher (220) au code d'appel d'urgence la catégorie de service d'urgence indépendante de la localisation choisie ; et
envoyer (230) la catégorie de service d'urgence indépendante de la localisation depuis le terminal mobile vers le réseau mobile avec l'appel d'urgence.

2. Procédé selon la revendication 1, dans lequel des services d'urgence disponibles sont stockés dans le terminal mobile ou dans un module d'identité d'abonné universelle situé dans le terminal mobile.

3. Procédé selon la revendication 2, dans lequel le procédé comprend en outre l'étape consistant à :
fournir, après un temps prédéterminé, un appel d'urgence, si une alternative n'est pas sélectionnée par l'utilisateur.

4. Procédé selon la revendication 1 ou 2, dans lequel le procédé comprend en outre l'étape consistant à :
maintenir un fichier de données de code d'appel d'urgence dans le terminal mobile, dans lequel chaque catégorie de service d'urgence correspond à un centre d'urgence.

5. Procédé selon la revendication 4, dans lequel le fichier de données de code d'appel d'urgence stocke la catégorie de service d'urgence indépendante de la localisation, le code d'appel d'urgence pour au moins un pays, et un identifiant d'étiquette alphabétique de code d'appel d'urgence.

6. Procédé selon la revendication 4 ou 5, dans lequel le fichier de données de code d'appel d'urgence est stocké sur une carte à puce.

7. Procédé selon l'une quelconque hors revendications 1 à 6, dans lequel la catégorie de service d'urgence indépendante de la localisation identifie des situations d'urgence, comprenant les secours de manière générale, la police, l'ambulance, l'incendie, ou une combinaison de ceux-ci.

8. Terminal mobile (102) permettant de fournir un appel d'urgence à un réseau mobile, comprenant :
des moyens pour recevoir un code d'appel d'urgence dans le terminal mobile en provenance d'un utilisateur ; et
des moyens pour fournir un identifiant d'étiquette alphabétique de code d'appel d'urgence, indiquant une situation d'urgence, à un écran d'affichage du terminal mobile, en réponse au code d'appel d'urgence, dans lequel l'identifiant d'étiquette alphabétique de code d'appel d'urgence permet à l'utilisateur d'obtenir, à partir de l'écran d'affichage du terminal mobile, des informations d'urgence utilisables pour choisir une catégorie de service d'urgence indépendante de la localisation qui est identifiée par chaque réseau mobile de la même manière ;
des moyens pour recevoir une catégorie de service d'urgence indépendante de la localisation choisie en provenance de l'utilisateur ;
des moyens pour rattacher au code d'appel d'urgence la catégorie de service d'urgence indépendante de la localisation choisie ; et
des moyens pour envoyer la catégorie de service d'urgence indépendante de la localisation depuis le terminal mobile vers le réseau mobile avec l'appel d'urgence.

9. Terminal mobile selon la revendication 8, comprenant en outre :
des moyens pour maintenir un fichier de données de code d'appel d'urgence dans le terminal mobile, dans lequel chaque catégorie de service d'urgence correspond à un centre d'urgence.

10. Terminal mobile selon la revendication 9, dans lequel le fichier de données de code d'appel d'urgence stocke la catégorie de service d'urgence indépendante de la localisation, le code d'appel d'urgence pour au moins un pays, et un identifiant d'étiquette alphabétique de code d'appel d'urgence.

11. Terminal mobile selon la revendication 9 ou 10, dans lequel le fichier de données de code d'appel d'urgence est stocké sur une carte à puce.

12. Terminal mobile selon l'une quelconque des revendications 8 à 11, dans laquelle la catégorie de service d'urgence indépendante de la localisation identifie des situations d'urgence, comprenant les secours de manière générale, la police, l'ambulance, l'incendie, ou une combinaison de ceux-ci.

13. Terminal mobile selon l'une quelconque des revendications 8 à 12, lequel est configuré pour permettre à l'utilisateur d'effectuer différentes catégories d'appels d'urgence ayant une pluralité de fonctions respectives différentes, lorsque l'utilisateur se trouve dans un pays étranger ou dans un pays d'origine, comprenant :
un circuit de fichier de données et de conversion d'appel (302) configuré pour fournir un signal d'urgence indépendante de la localisation (304), en réponse à un signal d'entrée utilisateur pour une urgence personnalisée (306) indiquant que l'utilisateur demande une assistance d'urgence sélectionnée, dans lequel l'entrée utilisateur pour une urgence requise ne change pas lorsque le terminal mobile (102) est emporté au delà d'une frontière internationale ;
un dispositif d'émission et de réception (308), réagissant au signal d'urgence indépendante de la localisation (304), configuré pour fournir un signal d'émission de sortie (310),
dans lequel le signal d'entrée utilisateur pour une urgence personnalisée (306) peut être sélectionné parmi une pluralité de signaux d'entrée utilisateur pour une urgence autorisés qui sont personnalisés de façon programmable pour s'adapter à l'utilisateur,
dans lequel le signal d'urgence indépendante de la localisation (304) peut être sélectionné parmi une pluralité de signaux d'urgence indépendants de la localisation autorisés différents, et
dans lequel l'identifiant d'étiquette alphabétique de code d'appel d'urgence est configuré pour signaler un affichage (322) pour permettre à l'utilisateur d'obtenir depuis le terminal mobile les informations d'urgence.

14. Terminal mobile selon la revendication 13, comprenant en outre :
un microphone (314), réagissant à une entrée audio de l'utilisateur, pour fournir un signal vocal de l'utilisateur (316) ; et
un haut-parleur (318), réagissant à un signal vocal entrant (320), pour fournir une sortie audio à l'utilisateur,
dans lequel le signal vocal entrant (320) contient des informations en provenance d'un centre d'urgence général, et
dans lequel le terminal mobile (102) comprend en outre un écran d'affichage (322), réagissant à un signal d'affichage (324) qui est initié par l'utilisateur et qui présente une composante de signal indiquant l'identifiant d'étiquette alphabétique de code d'appel d'urgence, l'écran d'affichage (322) étant destiné à fournir à l'utilisateur au moins un affichage de services d'urgence contenant des informations d'appel d'urgence pour aider l'utilisateur à sélectionner le signal d'entrée utilisateur pour une urgence personnalisée (306), ou le signal vocal entrant (320) contient des informations en provenance d'un type spécifique de centre d'urgence le plus proche d'une station de base qui communique avec le terminal mobile sur une interface sans fil, si le signal d'urgence indépendante de la localisation (304) comprend un code d'appel d'urgence, et comprend également une catégorie de service indiquant le type d'appel d'urgence.

15. Terminal mobile selon la revendication 14, dans lequel le signal d'affichage (324) est fourni par le circuit de fichier de données et de conversion d'appel (302).

16. Terminal mobile selon l'une quelconque des revendications 13 à 15, dans lequel le circuit de fichier de données et de conversion d'appel (302) est une carte à puce programmable qui est située de manière inamovible dans le terminal mobile (102).

17. Terminal mobile selon l'une quelconque des revendications 13 à 16, dans lequel un fichier de données de code d'appel d'urgence est stocké dans une carte à puce qui peut être retirée du terminal mobile, et dans lequel le fichier de données de code d'appel d'urgence fournit des informations concernant le numéro d'appel d'urgence, l'identifiant d'étiquette alphabétique de code d'appel d'urgence et la catégorie de service.

18. Terminal mobile selon l'une quelconque des revendications 13 à 17, dans lequel l'écran d'affichage (322) affichant ledit au moins un affichage de services d'urgence permet à l'utilisateur de placer automatiquement un appel en sélectionnant un service d'urgence.

19. Terminal mobile selon l'une quelconque des revendications 14 à 18, comprenant en outre un clavier (326) pour fournir le signal d'entrée utilisateur pour une urgence personnalisée (306) en réponse à une entrée d'urgence personnalisée.

20. Terminal mobile selon l'une quelconque des revendications 14 à 19, comprenant en outre un bouton d'urgence (328) pour fournir le signal d'entrée utilisateur pour une urgence personnalisée (306) en réponse à une entrée utilisateur, et dans lequel le type spécifique de centre d'urgence est le service des secours de manière générale, la police, les ambulances, ou les pompiers.

21. Carte à puce opérationnelle dans un terminal mobile pour fournir un appel d'urgence à un réseau mobile, la carte à puce comprenant un fichier de données de code d'appel d'urgence qui comprend en outre un numéro d'appel d'urgence, un identifiant d'étiquette alphabétique de code d'appel d'urgence, et une catégorie de service d'urgence indépendante de la localisation, dans laquelle le fichier de données de code d'appel d'urgence est destiné à traduire les données d'urgence depuis un format qui était entré par un utilisateur en un format qui est indépendante de la localisation, dans lequel l'identifiant d'étiquette alphabétique de code d'appel d'urgence permet à l'utilisateur d'obtenir, à partir d'un écran d'affichage du terminal mobile, des informations d'urgence utilisables pour choisir la catégorie de service d'urgence indépendante de la localisation, dans lequel la carte à puce permet au terminal mobile de réaliser les étapes consistant à :
fournir l'identifiant d'étiquette alphabétique de code d'appel d'urgence, indiquant une situation d'urgence, à un écran affichage du terminal mobile, en réponse à un code d'appel d'urgence qui est reçu de l'utilisateur ;
rattacher au code d'appel d'urgence une catégorie de services d'urgence indépendante de la localisation choisie qui est reçue de l'utilisateur, qui est identifié par chaque réseau de téléphonie mobile de la même façon ; et
envoyer la catégorie des services d'urgence indépendante de la localisation depuis le terminal mobile vers le réseau mobile avec l'appel d'urgence.
